# EUROPÄISCHE PATENTSCHRIFT

(11) **EP 0 694 715 B1**
(45) Veröffentlichungstag und Bekanntmachung des Hinweises auf die Patenterteilung: **23.05.2001**
(21) Anmeldenummer: 95110788.7
(22) Anmeldetag: 11.07.1995
(51) Int. Cl.: F16H 63/20, F16H 61/24

(54) **Innere Schaltvorrichtung für Wechselgetriebe von Kraftfahrzeugen**
Internal shift mechanism for vehicle transmissions
Dispositif interne de changement de rapport pour transmissions de véhicule

(30) Priorität: 30.07.1994 DE 4427076
(43) Veröffentlichungstag der Anmeldung: 31.01.1996
(73) Patentinhaber: Ford-Werke Aktiengesellschaft, 50735 Köln (DE); FORD MOTOR COMPANY LIMITED, Brentwood, Essex CM13 3BW (GB); FORD FRANCE SOCIETE ANONYME, 92506 Rueil Malmaison Cedex (FR)
(72) Erfinder: Deidewig, Hartmut, D-51503 Roesrath (DE); Sabel, Gustav, D-50765 Koeln (DE); Kumlali, Irfan, D-50668 Koeln (DE)
(74) Vertreter: Ritzkowsky, Harald, Dipl.-Ing.

(56) Entgegenhaltungen:
- EP-A- 0 084 239
- FR-A- 2 659 410

## Beschreibung

Die Erfindung bezieht sich auf eine innere Schaltvorrichtung für Wechselgetriebe von Kraftfahrzeugen, der im Oberbegriff des Patentanspruches 1 erläuterten Art.

Aus der DE-PS 35 36 099 ist eine innere Schaltvorrichtung für Wechselgetriebe von Kraftfahrzeugen etwa der im Oberbegriff des Patentanspruches 1 erläuterten Art bekannt.

Bei dieser bekannten inneren Schaltvorrichtung ist ein Schaltfinger über eine Wähl- und Schaltvorrichtung betätigbar, die in einem am Getriebegehäuse anbringbaren Schaltungsgehäuse angeordnet ist und zwei im rechten Winkel zueinander angeordnete Wähl- bzw. Schaltwellen aufweist, die über je eine externe Schaltvorrichtung, z.B. über einen Bowdenzug betätigbar sind. Bei dieser bekannten inneren Schaltvorrichtung wird die Wählbewegung aus einer Schwenkbewegung der Wählwelle in eine Schiebebewegung eines Schaltstückes zum Wählen umgesetzt und die Schaltbewegung der Schaltwelle von einer Schwenkbewegung in eine weitere Schwenkbewegung zum Schalten umgesetzt.

Aus der EP-PS 0 084 239 ist eine weitere innere Schaltvorrichtung für Wechselgetriebe von Kraftfahrzeugen, etwa der im Oberbegriff des Patentanspruches 1 erläuterten Art bekannt, bei der der Schaltfinger über eine Wähl- und Schaltvorrichtung betätigbar ist, die in einem am Getriebegehäuse anbringbaren Schaltungsgehäuse angeordnet ist, die zwei im rechten Winkel zueinander angeordnete Wähl- bzw. Schaltwellen aufweist, die über je eine externe Schaltvorrichtung, z.B. über einen Bowdenzug betätigbar sind.

Bei dieser bekannten inneren Schaltvorrichtung wird wieder eine Schwenkbewegung der Wählwelle in eine Schiebebewegung eines Schaltstückes umgesetzt und die Schwenkbewegung der Schaltwelle wird zum Einrücken der Gänge auf das Schaltstück übertragen.

Bei beiden bekannten inneren Schaltvorrichtungen ist es verhältnismäßig einfach, die Wähl-Schiebebewegung z.B. durch Anschläge genau zu begrenzen, bei der Schwenk-Schaltbewegung ist jedoch eine Begrenzung der Schaltwege durch Anschläge nicht vorgesehen und auch schwer möglich.

Aus der FR 2 659 410 A1 ist eine innere Schaltvorrichtung für Wechselgetriebe von Kraftfahrzeugen bekannt, bei der einerseits eine Wähl- bzw. und eine Schaltwelle vorgesehen sind, die über je eine externe Schaltvorrichtung, wie z.B. Bowden-Züge betätigbar sind, die eine der beiden Wellen ist hierbei in einem Schaltungsgehäuse angeordnet, wohingegen die zweite Welle unmittelbar im Getriebegehäuse angeordnet ist.

Dementsprechend ist eine vollständige Vormontage der Bauteile der inneren Schaltvorrichtung in einem Schaltungsgehäuse nicht möglich und bei dem Montieren des Schaltungsgehäuses auf der Öffnung des Getriebegehäuses müssen miteinander zusammenwirkende Bauteile miteinander in Eingriff gebracht werden, was durch Herstellungs- und Montagetoleranzen die Schaltungsgenauigkeit dieser Schaltvorrichtung vermindert.

Das Ziel der Erfindung ist es, eine innere Schaltvorrichtung für Wechselgetriebe von Kraftfahrzeugen der im Oberbegriff des Patentanspruches 1 erläuterten Art zu schaffen, bei der insbesondere für die Schaltbewegung in einfacher Weise feste Anschläge vorgesehen werden können, damit bei auf dem Handschalthebel ausgeübten erheblichen Kräften es nicht zu unerwünschten, die Funktion der Schaltung beeinträchtigenden Verbiegungen der die Schaltungen ausführenden Schaltarme und Schaltgabeln kommen kann.

Dieses Ziel wird gemäß der Erfindung erreicht, indem bei einer innere Schaltvorrichtung für Wechselgetriebe von Kraftfahrzeugen, der im Oberbegriff des Patentanspurches 1 erläuterten Art die im Kennzeichenteil des Patentanspruches 1 aufgezeigten Merkmale angewendet werden.

Dadurch, daß die Wählwelle im Schaltungsgehäuse drehbar und axial verschiebbar gelagert ist und auf der Wählwelle ein drehfest angeordneter Wähl- und Schaltfingerteil vorgesehen ist, auf der Wählwelle konzentrisch zum Wähl-Schaltfingerteil ein im Schaltungsgehäuse durch dessen Seitenwände axial festgelegtes, jedoch schwenkbares Sperr- und Rückstellteil angeordnet ist und auf der Schaltwelle ein Schaltteil mit einer Schaltzunge drehfest angeordnet ist und zwischen Schaltflansche am Wähl- und Schaltfingerteil eingreift, um dieses axial mit der Wählwelle zu verschieben und wobei durch die Nabenteile des konzentrisch zum Wähl- und Schaltfingerteil angeordneten Sperr- und Rückstellteiles Anschläge für die Nabe des Wähl- und Schaltfingerteiles gebildet werden, wird vermieden, daß zu große Schaltkräfte zu einem Verbiegen von Teilen des inneren Schaltgestänges führen können.

In den Ansprüchen 2 bis 6 sind weitere zweckmäßige Ausgestaltungen der Erfindung erläutert.

Die Erfindung wird anhand eines in den beiliegenden Zeichnungen gezeigten Ausführungsbeispieles näher erläutert. Es zeigt:
- Fig. 1: eine Plotterzeichnung eines Wechselgetriebes eines Kraftfahrzeuges'mit der in einem Kreis IV hervorgehobenen inneren Schaltvorrichtung gemäß der Erfindung;
- Fig. 2: eine Plotterzeichnung senkrecht zu den Getriebewellen in Fig. 1 mit der in einem Kreis V hervorgehobenen inneren Schaltvorrichtung gemäß der Erfindung;
- Fig. 3: eine Ansicht der inneren Schaltvorrichtung gemäß der Erfindung von der offenen Seite des Schaltungsgehäuses her;
- Fig. 4: einen Schnitt entlang der Linie IV-IV in Fig. 3;
- Fig. 5: einen Schnitt entlang der Linie V-V in Fig. 3; und
- Fig. 6: eine Explosionsdarstellung der im Schaltungsgehäuse angeordneten Teile der inneren Schaltvorrichtung gemäß der Erfindung;
- Fig. 7: einen ähnlichen Schnitt wie Fig. 4, mit einer anderen Anordnung der Schaltanschläge und
- Fig. 8: einen ähnlichen Schnitt wie Fig. 5, mit der anderen Anordnung der Schaltanschläge.

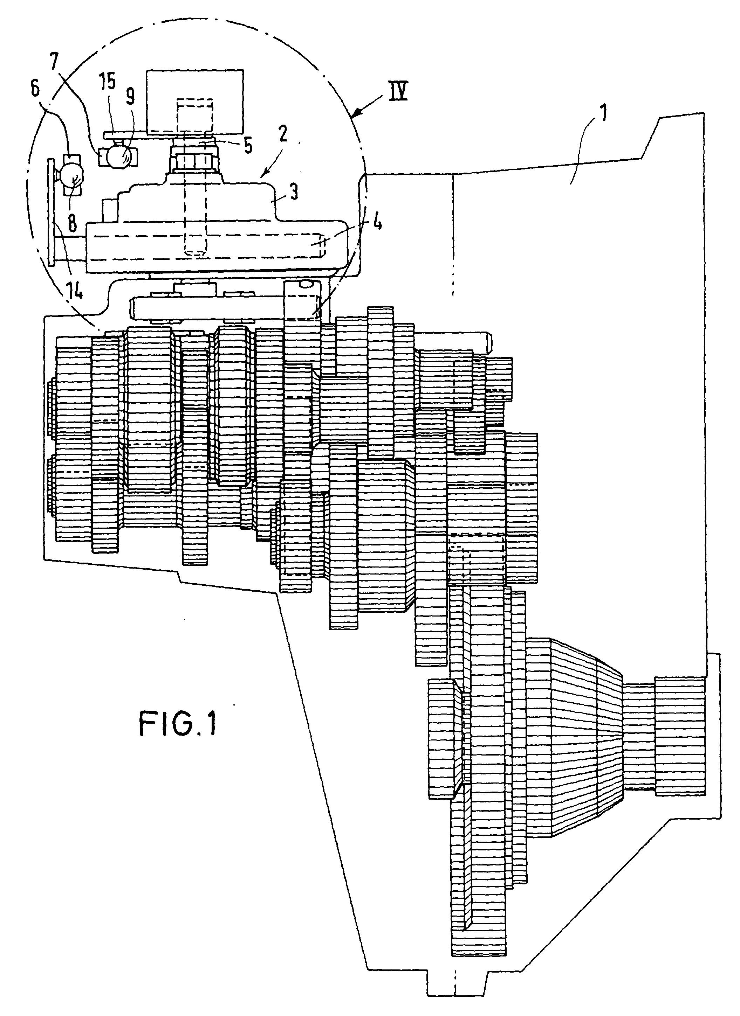

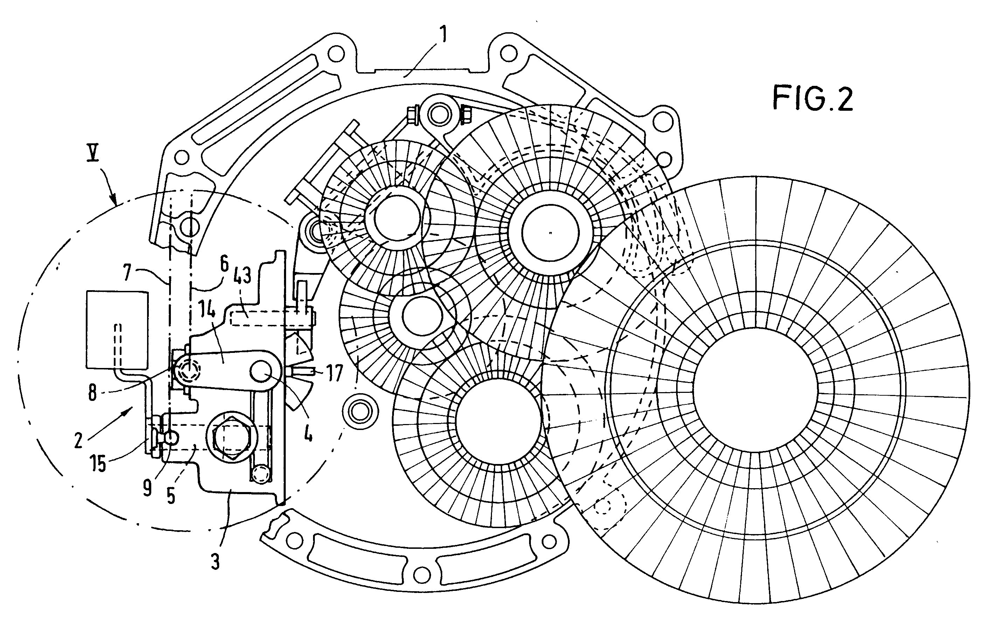

Bei einem aus den Figuren 1 und 2 ersichtlichen Wechselgetriebe eines Kraftfahrzeuges sind in einem Getriebegehäuse 1 mehrere Getriebewellen (nicht näher bezeichnet) angeordnet, auf denen miteinander in Eingriff stehende Getriebezahnräder teils fest, teils lose laufend angeordnet sind und wobei die lose laufenden Getriebezahnräder über Synchronisierkupplungen wahlweise zum Schalten unterschiedlicher Gänge drehfest mit ihren jeweiligen Getriebewellen verbindbar sind und wobei die Schaltmuffen der Synchronisierkupplungen über Schaltarme und Schaltgabeln verschiebbar sind, die ihrerseits auf im Getriebegehäuse festgelegten Schaltstangen verschiebbar sind.

Die Schaltgabeln sind in üblicher Weise mit Schaltarmen versehen, worin Nuten angeordnet sind, in die ein zunächst die Wähl- und darauffolgend die Schaltbewegung ausführender Schaltfinger eingreift, der über eine Wähl- und Schaltvorrichtung 2 betätigbar ist, die in einem am Getriebegehäuse 1 anbringbaren Schaltungsgehäuse 3 untergebracht ist und zwei im rechten Winkel zueinander angeordnete Wähl- und Schaltwellen 4 und 5 aufweist, die über je eine externe Schaltvorrichtung, z.B. in Form eines Bowdenzuges 6 und 7 betätigbar sind, die an entsprechenden Kugelköpfen 8 und 9 angreifen.

Die Einzelheiten des Wechselgetriebes des Kraftfahrzeuges mit den Getriebezahnrädern und den Getriebewellen braucht hier nicht im einzelnen erläutert zu werden, da diese nicht Gegenstand der Erfindung sind.

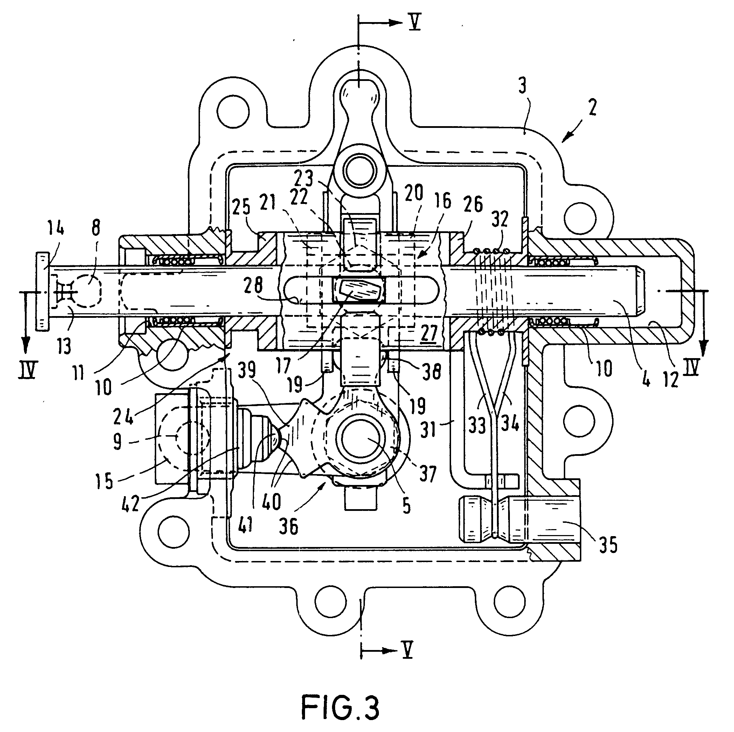

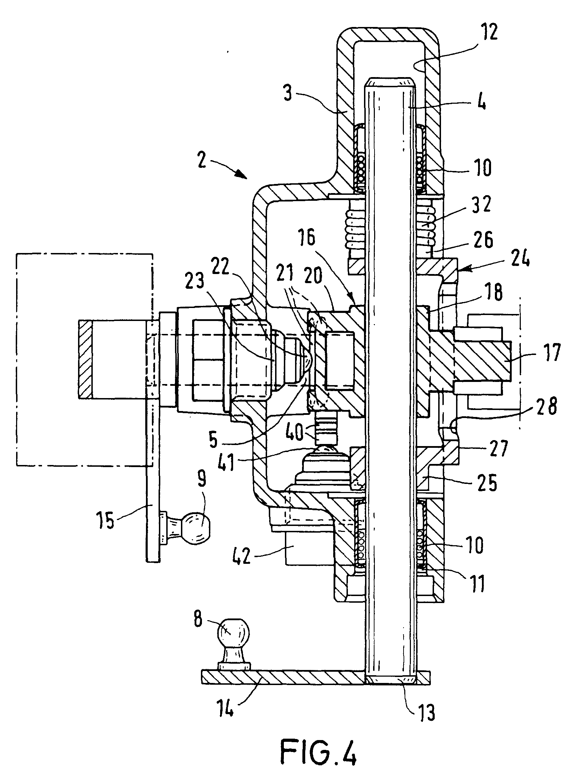

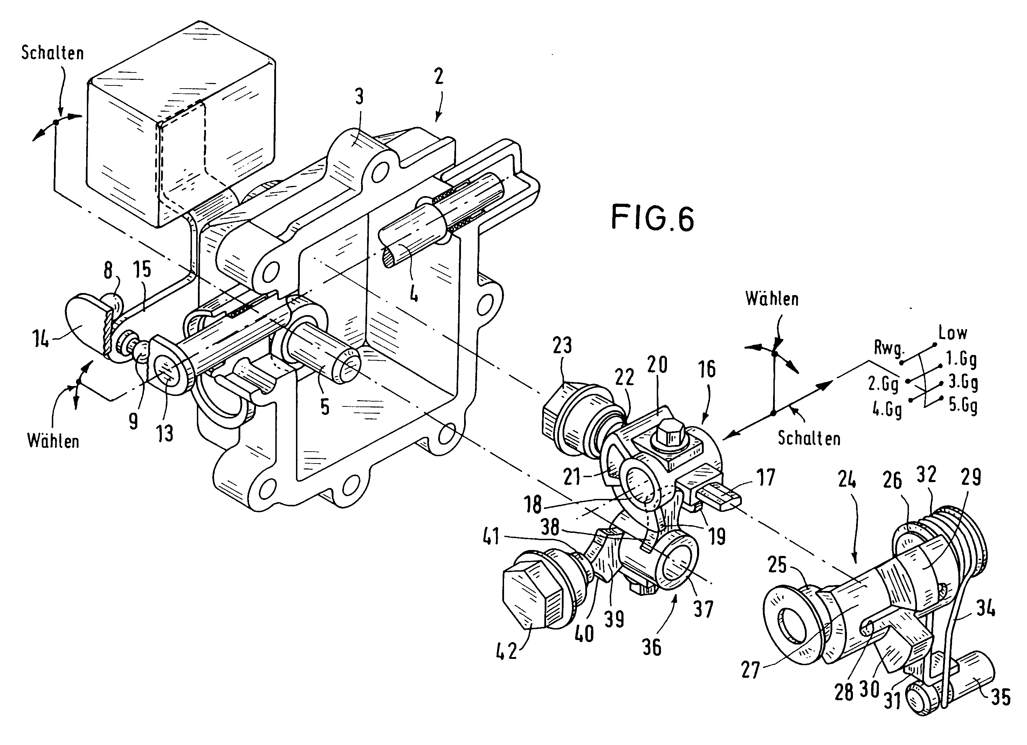

Die gemäß der Erfindung ausgebildete innere Schaltvorrichtung für das Wechselgetriebe eines Kraftfahrzeuges wird im Zusammenhang mit den Figuren 3, 4 und 5 sowie in Zusammenhang mit der Explosionsdarstellung der Fig. 6 näher erläutert.

Wie aus der in Fig. 3 ersichtlichen Ansicht der inneren Schaltvorrichtung 2 von der offenen Seite des Schaltungsgehäuses 3 zu entnehmen ist, sind im Schaltungsgehäuse 3 zwei im rechten Winkel zueinander angeordnete Wähl- bzw. Schaltwellen 4 und 5 angeordnet, von denen die Wählwelle 4 über Axialkugelhülsen 10 in Aufnahmebohrungen 11 und 12 drehbar und axial verschiebbar gelagert ist. Am äußeren freien Ende 13 der Wählwelle 4 greift ein Hebelarm 14 an, an dessen Ende der Kugelkopf 8 zur Aufnahme des Bowdenzuges 6 befestigt ist. Die Flexibilität des Bowdenzuges 6 ermöglicht hierbei die unbeeinträchtigte axiale Bewegung der Wählwelle 4.

Auf der Wählwelle 4 ist ein Wähl-Schaltfingerteil 16 fest angeordnet und weist eine Nabe 18, einen sich radial erstrekkenden Schaltfinger 17 zwei Schaltflansche 19 und einen Rastsektor 20 auf. Der Rastsektor 20 ist mit einer Anzahl von sich axial erstreckenden, das Schaltschema nachbildenden Rastnuten 21 versehen, die mit einer federbelasteten Kugelraste 22 zusammenwirken, die in einem im Schaltungsgehäuse 3 einschraubbaren Kugelrastenbauteil 23 angeordnet ist.

Die Wählwelle 4 nimmt weiterhin ein konzentrisch zum Wähl- und Schaltfingerteil 16 angeordnetes Sperr- und Rückstellteil 24 auf, das zwei Nabenteile 25 und 26 aufweist, die über ein teilzylindrisches Brückenteil 27 mit einem Längsschlitz 28 miteinander verbunden sind. Das Sperr- und Rückstellteil 24 weist weiterhin sich vom Brückenteil 27 radial erstreckende Sperrflügel 29 und 30 auf und ist benachbart dem spulenartigen Nabenteil 26 mit einem sich radial erstreckenden Rückstellarm 31 versehen.

Auf dem spulenartigen Nabenteil 26 ist eine Schraubenwickelfeder 32 mit zwei sich radial wegerstreckenden Federenden 33 und 34 angeordnet, die mit einem Bolzen 35 im Schaltungsgehäuse 3 zusammenwirken.

Auf der Schaltwelle 5 ist ein Hebelarm 15 fest angeordnet, der den Kugelkopf 9 trägt, an dem der Bowdenzug angreift. Auf der Schaltwelle 5 ist weiterhin ein Schaltwellenteil 36 fest angeordnet und weist einen Nabenteil 37 auf, an dem eine Schaltzunge 38 und ein Nockenansatz 39 ausgebildet sind, dessen Rast- und Nockenfläche 40 mit einer federbelasteten Kugelraste 41 zusammenwirkt, die in einem Kugelrastengehäuse 42 in Gehäuse 3 angeordnet ist. Die Schalt- zunge 38 greift zwischen die beiden Schaltflansche 19 am Wahl- und Schaltfingerteil 16.

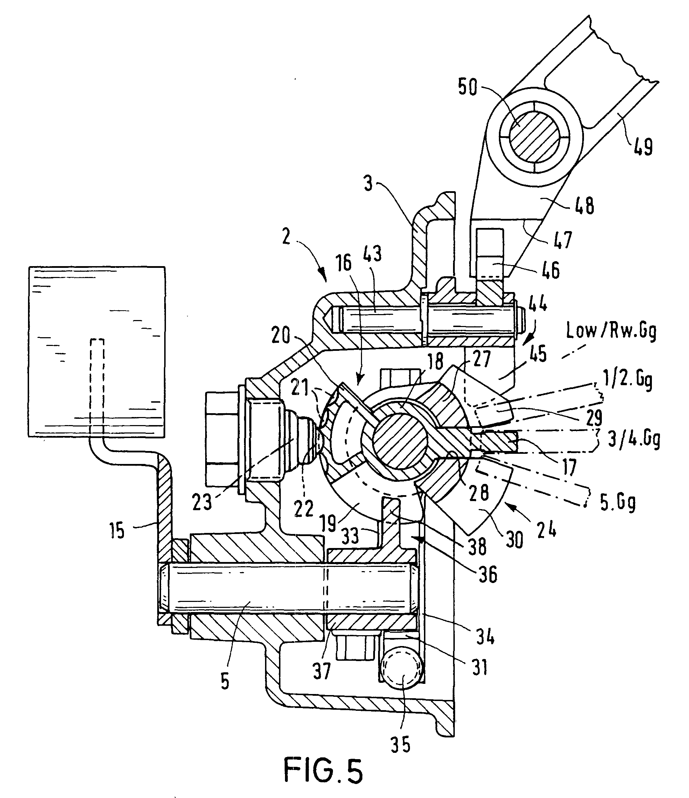

In Fig. 5 sind benachbart dem Schaltfinger 17 und den Sperrflügeln 29 und 30 Schaltarme mit Schaltnuten von verschiedenen Schaltgabeln in Strich-Punkt-Linien angedeutet, die zum Schalten eines 1. und 2. Ganges, eines 3. und 4. Ganges und eines 5. Ganges erforderlich sind.

Aus Fig. 5 ist noch eine zweckmäßige Ausgestaltung der erfindungsgemäßen innere Schaltvorrichtung ersichtlich, und zwar ist am oberen Teil des Schaltungsgehäuses 3 ein Bolzen 43 eingesetzt, um den ein doppelarmiger Hebel 44 drehbar gelagert ist, der an seinem einen Ende 45 eine Nut zum Eingriff des Schaltfingers 17 aufweist und dessen anderes Ende 46 in eine Nut 47 an einem Schaltarm 48 einer Schaltgabel 49 für einen Rückwärtsgang eingreift, die auf einer Schaltstange 50 verschiebbar angeordnet ist. Auf diese Weise kann eine für diese Schaltgabel für den Rückwärtsgang erforderliche Bewegungsumkehr in einfacher Weise bereitgestellt werden.

Nachdem im Zusammenhang mit den Figuren 3, 4, 5 und 6 der Aufbau der inneren Schaltvorrichtung gemäß der Erfindung im einzelnen erläutert wurde, wird nachfolgend deren Funktionsweise beschrieben.

Ein von einem nicht gezeigten Handschalthebel kommender Bowdenzug 6 überträgt eine Wählbewegung auf den Hebel 14, wodurch die Wählwelle 4 im Schaltungsgehäuse 3 verdreht wird. Dadurch, daß sich der Schaltfinger 17 durch den Längsschlitz 28 im Sperr- und Rückstellteil 24 erstreckt, kann über den Schaltfinger 17 eine in einem Schaltarm einer Schaltgabel angeordnete Nut (nicht gezeigt) ausgewählt werden. Während dieser Auswählbewegung wird der Sperr- und Rückstellteil 24 verdreht und die sich radial erstreckenden Sperrflügel 29 und 30 sperren, wie aus Fig. 5 ersichtlich, die übrigen nicht ausgewählten Schaltgabeln des Getriebes gegen eine unerwünschte Mitbewegung. Gleichzeitig damit wird über den Rückstellarm 31 eines der Federenden 33 oder 34 radial ausgelenkt und damit dafür Sorge getragen, daß der Schaltfinger 17, sobald er wieder in seine Neutralstellung gelangt, auch in seine Neutralgasse zurückgeführt wird.

Sobald die Vorwählbewegung abgeschlossen ist, wird über den Handschalthebel (nicht gezeigt) die Schaltbewegung eingeleitet und diese wird über den Hebelarm 15 auf die Schaltwelle 5 übertragen und die Drehung der Schaltwelle 5 wird über die Schaltzunge 38, die zwischen den beiden Schaltflanschen 19 am Wähl- und Schaltfingerteil 16 angreift, in eine axiale Bewegung des Schaltfingerteiles 16 und der damit fest verbunden Wählwelle 4 umgesetzt. Die Schaltbewegung wird hierbei durch die Nabenteile 25 und 26 des Sperr- und Rückstellteiles 24 axial begrenzt, so daß auch bei ruckartig und kräftig durchgeführten Schaltbewegungen keine Kräfte auf die Schaltgabeln ausgeübt werden können, die ein Verbiegen und damit eine Störung der Schaltvorrichtung hervorrufen können.

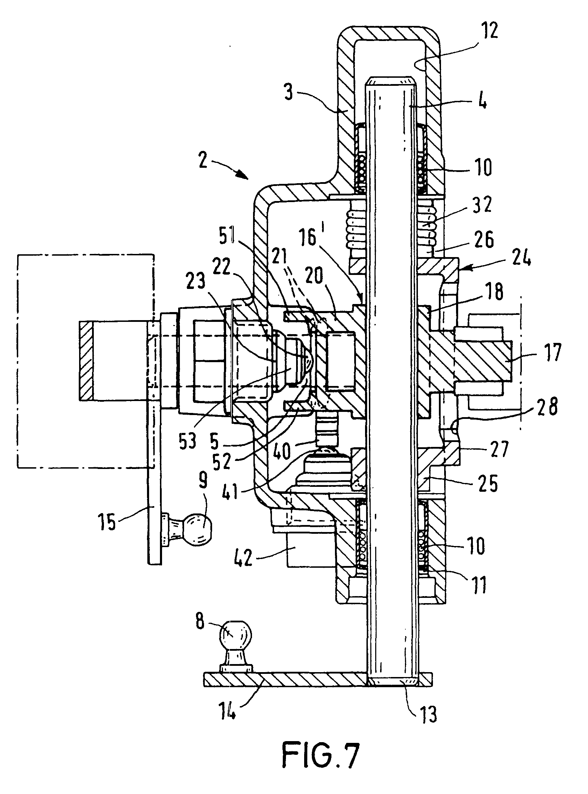

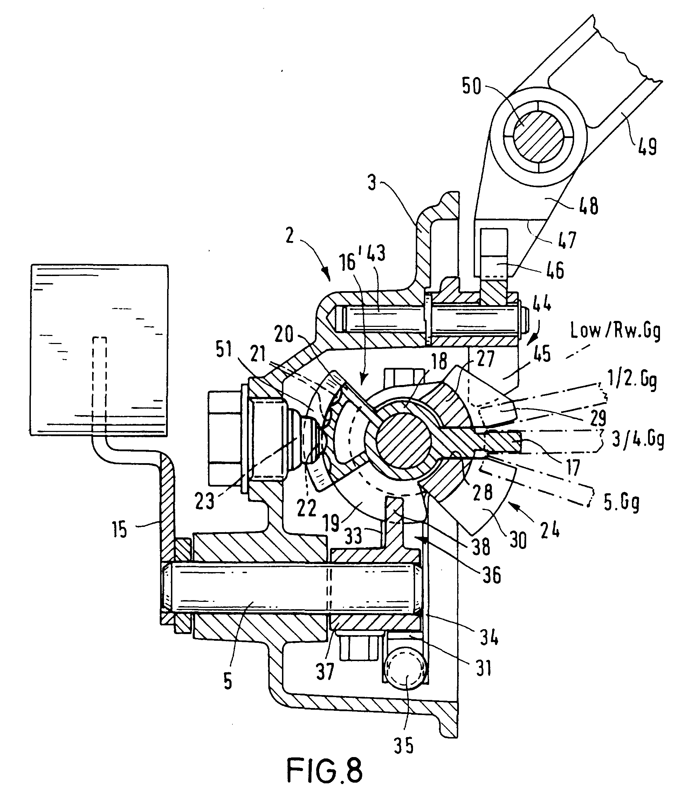

In den Figuren 7 und 8 ist eine andere Anordnung der Schaltanschläge gezeigt. Die Bauteile der inneren Schaltvorrichtung entsprechen im wesentlichen den Bauteilen, die in Verbindung mit den Figuren 3 und 6 erläutert wurden und sind daher mit den gleichen Bezugszeichen versehen.

Lediglich das geänderte Bauteil des Wähl- und Schaltfingerteiles ist mit den gleichen, jedoch mit einem Strich-Index versehenen Bezugszeichen versehen.

Bei der in den Figuren 7 und 8 gezeigten Ausführungsformen ist das Wähl- und Schaltfingerteil 16' zusätzlich zu den Teilen, die schon in Verbindung mit den Figuren 3 bis 6 erläutert wurden, mit zwei Anschlagflanschen 51 und 52, die mit dem Zylinder 53 des Kugelrastenbauteiles 23, der die Kugelraste 22 hält zusammenwirken, um die gewünschte Begrenzung der Schaltbewegung bereitzustellen.

Auf diese Weise können die Schaltanschläge genauer toleriert werden, da ein Bauteil, nämlich das Sperr- und Rückstellteil 24 weniger bei der Toleranzsummierung mitwirkt.

Das auf dem Hebelarm 15 angeordnete Gewicht sorgt für eine Unterstützung der Schalt-Einrückbewegung.

## Patentansprüche

1. Innere Schaltvorrichtung für Wechselgetriebe von Kraftfahrzeugen, mit in einem Getriebegehäuse angeordneten mehreren Getriebewellen auf denen miteinander in Eingriff stehende Getriebezahnräder teils fest, teils lose laufend angeordnet sind und wobei die lose laufenden Getriebezahnräder über Synchronisierkupplungen wahlweise, zum Schalten unterschiedlicher Gänge drehfest mit ihren jeweiligen Getriebewellen verbindbar sind und wobei die Schaltmuffen der Synhronisierkupplungen über Schaltgabeln verschiebbar sind, die ihrerseits auf im Getriebegehäuse festgelegten Schaltstangen verschiebbar sind, wobei die Schaltgabeln mit Schaltarmen und darin angeordneten Nuten versehen sind, in die ein die Wähl- und die Schaltbewegung ausführender Schaltfinger (17) eingreift, der über eine Wähl- und Schaltvorrichtung (2) betätigbar ist, die in einem am Getriebegehäuse (1) anbringbaren Schaltungsgehäuse (3) untergebracht ist und die zwei im rechten Winkel zueinander angeordnete Wähl- bzw. Schaltwellen (4 und 5) aufweist, die über z.B. je eine externe Schaltvorrichtung, wie Bowdenzüge (6 und 7) betätigbar sind,
**dadurch gekennzeichnet**, daß
- die Wählwelle (4) im Schaltungsgehäuse (3) drehbar und axial verschiebbar gelagert ist und auf der Wählwelle (4) ein drehfest angeordneter Wähl- und Schaltfingerteil (16) vorgesehen ist,
- auf der Wählwelle (4) konzentrisch zum Wähl-Schaltfingerteil (16) ein im Schaltungsgehäuse (3) durch dessen Seitenwände axial festgelegtes, jedoch schwenkbares Sperr- und Rückstellteil (24) angeordnet ist und
- auf der Schaltwelle (5) ein Schaltteil (36) mit einer Schaltzunge (38) drehfest angeordnet ist, die zwischen Schaltflansche (19) am Wähl- und Schaltfingerteil (16) eingreift um dieses axial mit der Wählwelle (4) zu verschieben und
- wobei durch die Nabenteile (25 und 26) des konzentrisch zum Wähl- und Schaltfingerteil (16) angeordneten Sperr- und Rückstellteiles (24) Anschläge für die Nabe (18) des Wähl- und Schaltfingerteiles (16) gebildet werden.

2. Innere Schaltvorrichtung nach Anspruch 1,
**dadurch gekennzeichnet**, daß
- das auf der Wählwelle (4) angeordnete Sperr- und Rückstellteil (24) sich radial nach außen erstreckenden Sperrflügel (29 und 30) aufweist, zwischen denen sich eine die Schaltbewegung des Schaltfingers (17) ermöglichender Längsschlitz (28) erstreckt und
- es an seinem spulenförmigen Nabenteil (26) mit einem Rückstellarm (31) versehen ist und eine Schrauben-Wickelfeder (32) mit zwei sich radial wegerstreckenden Federenden (33 und 34) aufnimmt, die sich am Rückstellarm (31) und an einem im Schaltungsgehäuse (3) festgelegten Bolzen (35) abstützen.

3. Innere Schaltvorrichtung nach den Ansprüchen 1 und 2,
**dadurch gekennzeichnet**, daß
- das auf der Wählwelle (4) drehfest angeordnete Wähl- und Schaltfingerteil (16) an dem dem Schaltfinger (17) entgegengesetzten Ende mit einem Sektorteil (20) mit das Schaltschema nachbildenden Rastausnehmungen (21) versehen ist, die mit einer federbelasteten Kugelraste (22) zusammenwirken, die von einem im Schaltungsgehäuse (3) angeordneten Kugelrastenbauteil (23) getragen wird.

4. Innere Schaltvorrichtung nach den Ansprüchen 1 bis 3,
**dadurch gekennzeichnet**, daß
- an dem auf der Schaltwelle (5) angeordneten Schaltteil (36) in rechtem Winkel zur Schaltzunge (38) ein Nockenansatz (39), mit Rast- bzw. Nockenflächen (40) angeordnet ist, die mit einer federbelasteten Kugelraste (41) zusammenwirken, die von einem im Schaltungsgehäuse (3) angeordneten Kugelrastenbauteil (42) getragen wird.

5. Innere Schaltvorrichtung nach den Ansprüchen 1 bis 4,
**dadurch gekennzeichnet**, daß
- am Schaltungsgehäuse (3) um einen Bolzen (43) ein Hebelarm (44) angeordnet ist, dessen eines Ende mit einer Nut (45) zum Eingriff des Schaltfingers (17) versehen ist und dessen anderes Ende (46) in Eingriff mit einer Nut (47) an einem Schaltarm (48) einer Schaltgabel (49) steht, um diese entgegengesetzt zur Bewegung des Schaltfingers (17) auf ihrer Schaltstange (50) zu verschieben.

6. Innere Schaltvorrichtung nach dem Oberbegriff des Anspruches 1,
**dadurch gekennzeichnet**, daß
- die Wählwelle (4) im Schaltungsgehäuse (3) drehbar und axial verschiebbar gelagert ist und auf der Wählwelle (4) ein drehfest angeordneter Wähl- und Schaltfingerteil (16') vorgesehen ist,
- auf der Wählwelle (4) konzentrisch zum Wähl-Schaltfingerteil (16') ein im Schaltungsgehäuse (3) durch dessen Seitenwände axial festgelegtes, jedoch schwenkbares Sperr- und Rückstellteil (24) angeordnet ist und
- auf der Schaltwelle (5) ein Schaltteil (36) mit einer Schaltzunge (38) drehfest angeordnet ist, die zwischen Schaltflansche (19) am Wähl- und Schaltfingerteil (16') eingreift um dieses axial mit der Wählwelle (4) zu verschieben,
- wobei am Wähl- und Schaltfingerteil (16') benachbart einem Rastsektor (20') Anschlagflansche (51 und 52) angeordnet sind, die mit einem Zylinder (53) des Kugelrastenbauteiles (23), der die Kugelraste (22) aufnimmt zusammenwirken.

## Claims

1. Internal shift mechanism for vehicle transmissions with several gear shafts positioned in a gear box, on which gears in association with one another are positioned, partly securely, partly running loose, and wherein the loose running gears can be connected via synchronisation clutches optionally for the purpose of switching different gears in a rotationally secure way with their respective gear shafts, and where the shift sleeves of the synchronisation clutches can be displaced via shift forks, which for their part can be displaced on shift rods secured in the gearbox , wherein the shift forks are provided with shift arms and grooves positioned therein, into which a shift finger (17) carrying out the selector and shift movement engages, which can be activated via a selector and shift mechanism (2), which is housed in a shift case (3) which can be positioned on the gearbox (1), and which has two selector / shift shafts (4 and 5) positioned at right angles to one another, which can be activated e.g. via respectively an external shift mechanism , like Bowden cables (6 and 7),
characterised in that
- the selector shaft (4) is positioned in the shift case (3) in a rotating and axially displaceable way and on the selector shaft (4) there is a selector and shift finger component (16) positioned in a rotationally secure way,
- on the selector shaft (4) concentric with the selector-shift finger component (16) there is a block and return component (24) axially secured in the shift case (3) through its side walls, but which can be swung,
- on the shift shaft (5) there is a shift component (36) with a shift tongue (38) positioned in a rotationally secure way, wherein this shift tongue (38) engages between shift flanges (19) on the selector and shift finger component (16) in order to displace this axially with the selector shaft (4), and
- wherein through the hub components (25 and 26) of the block and return component (24) positioned concentrically with the selector and shift finger component (16) catches are formed for the hub (18) of the selector and shift finger component (16).

2. Internal shift mechanism according to Claim 1
characterised in that
- the block and return component (24) positioned on the selector shaft (4) has radially outwards extending blocking wings (29 and 30), between which a longitudinal slot facilitating the shift movement of the shift finger (17) extends and
- it is provided on its coil-form hub component (26) with a return arm (31) and receives a screw coil spring (32) with two radially away extending spring ends (33 and 34), wherein these spring ends (33 and 34) rest on the return arm (31) and on a bolt secured in the shift case (3).

3. Internal shift mechanism according to Claims 1 and 2
characterised in that
- the selector and shift finger component (16) positioned on the selector shaft (4) in a rotationally secure way on the end contrary to the shift finger (17) is provided with a sector component (20) with detent recesses reproducing the circuit diagram, which work together with a spring-loaded ball catch (22), which is carried by a ball catch component (23) positioned in the shift case (3).

4. Internal shift mechanism according to Claims 1 to 3
characterised in that
on the shift component (36) positioned on the shift shaft (5) at right angles to the shift tongue (38) there is a cam neck (39) with detent and cam areas (40), which work together with a spring-loaded ball catch (41), which is carried by a ball catch component (42) positioned in the shift case (3).

5. Internal shift mechanism according to Claims 1 to 4
characterised in that
on the shift case (3) around a bolt there is a lever arm (44), on one end of which there is a groove (45) for engaging the shift finger (17) and whose other end (46) engages with a groove (47) of a shift arm (48) of a shift fork (49), in order to displace this contrary to the movement of the shift finger (17) on its shift rod (50).

6. Internal shift mechanism according to the introductory clause of Claim 1
characterised in that
the selector shaft (4) is positioned in the shift case (3) in a rotating and axial displaceable way, and on the selector shaft (4) there is a rotationally secure selector and shift finger component (16'),
- on the selector shaft (4) concentric with the selector-shift finger component (16'), there is a block and return component (24) axially secured in the shift case (3) through its side walls, but which can be swung and
- on the shift shaft (5) there is a shift component (36) with a shift tongue (38) positioned in a rotationally secure way, wherein this shift tongue (38) engages between shift flanges (19) on the selector and shift finger component (16'), in order to displace this axially with the selector shaft (4),
- wherein on the selector and shift finger component (16') neighbouring a detent sector (20') there are catch flanges (51 and 52) which work together with a cylinder (53) of the ball catch component (23), which receives the ball catch (22).

## Revendications

1. Dispositif interne de changement de rapports pour boîtes de vitesses de véhicules automobiles, comprenant plusieurs arbres de transmission logés dans un carter de boîte et sur lesquels des roues dentées de transmission, mutuellement en prise, sont calées en partie de manière fixe, en partie de manière à tourner librement, les roues dentées de transmission, tournant librement, pouvant être sélectivement verrouillées en rotation avec leurs arbres de transmission considérés, par l'intermédiaire d'accouplements de synchronisation, en vue de commuter différents rapports, et les manchons de commutation desdits accouplements de synchronisation pouvant coulisser par l'intermédiaire de fourchettes de commutation qui peuvent coulisser, à leur tour, sur des tiges de commutation consignées à demeure dans le carter de boîte, sachant que les fourchettes de commutation sont pourvues de bras de commutation et de saignées pratiquées dans ces derniers, dans lesquelles pénètre un doigt commutateur (17) accomplissant le mouvement de sélection et de commutation, et pouvant être actionné par l'intermédiaire d'un dispositif (2) de sélection et de changement de vitesses, qui est logé dans un carter de commutation (3) pouvant être rapporté sur le carter de boîte (1), et qui comporte deux arbres respectivement sélecteur et commutateur (4 et 5) mutuellement disposés à angle droit et pouvant être respectivement actionnés, par exemple, par l'intermédiaire d'un dispositif externe de changement de rapports, tel que des tringleries Bowden (6 et 7),
caractérisé par le fait que
- l'arbre sélecteur (4) est monté à rotation et à coulissement axial dans le carter de commutation (3), et une pièce (16) à doigt sélecteur et commutateur, verrouillée en rotation, est prévue sur ledit arbre sélecteur (4),
- une pièce (24) de blocage et de rappel, disposée sur l'arbre sélecteur (4) concentriquement à la pièce (16) à doigt sélecteur et commutateur, est immobilisée axialement dans le carter de commutation (3) par les parois latérales de celui-ci, mais peut toutefois accomplir un pivotement, et
- une pièce de commutation (36), verrouillée en rotation sur l'arbre commutateur (5), comporte une languette de commutation (38) qui s'engage entre des collerettes de commutation (19), sur la pièce (16) à doigt sélecteur et commutateur, de manière à faire coulisser axialement ladite pièce avec l'arbre sélecteur (4), et
- sachant que les parties de moyeu (25 et 26) de la pièce (24) de blocage et de rappel, agencée concentriquement à la pièce (16) à doigt sélecteur et commutateur, forment des butées destinées au moyeu (18) de ladite pièce (16) à doigt sélecteur et commutateur.

2. Dispositif interne de changement de rapports selon la revendication 1,
caractérisé par le fait que
- la pièce (24) de blocage et de rappel, disposée sur l'arbre sélecteur (4), présente des ailes de blocage (29 et 30) à étendue vers l'extérieur dans le sens radial, entre lesquelles s'étend une fente longitudinale (28) permettant le mouvement de commutation du doigt commutateur (17), et
- ladite pièce est dotée d'un bras de rappel (31) sur sa partie de moyeu (26) en forme de bobine, et reçoit un ressort hélicoïdal (32) muni de deux extrémités (33 et 34) s'écartant radialement l'une de l'autre et prenant appui sur ledit bras de rappel (31), et sur un tenon (35) consigné à demeure dans le carter de commutation (3).

3. Dispositif interne de changement de rapports selon les revendications 1 et 2,
caractérisé par le fait que
- la pièce (16) à doigt sélecteur et commutateur, verrouillée en rotation sur l'arbre sélecteur (4), est munie, à l'extrémité tournée à l'opposé dudit doigt commutateur (17), d'une partie (20) en forme de secteur comportant des évidements d'encliquetage (21) qui reproduisent le schéma de changement de rapports et coopèrent avec une bille encliquetable (22), sollicitée élastiquement, portée par une pièce structurelle (23) logée dans le carter de commutation (3).

4. Dispositif interne de changement de rapports selon les revendications 1 à 3,
caractérisé par le fait
- qu'une protubérance (39) à came, installée sur la pièce de commutation (36) disposée sur l'arbre commutateur (5), à angle droit par rapport à la languette de commutation (38), présente des surfaces respectives (40) d'encliquetage ou d'arrêt qui coopèrent avec une bille encliquetable (41), sollicitée élastiquement, portée par une pièce structurelle (42) logée dans le carter de commutation (3).

5. Dispositif interne de changement de rapports selon les revendications 1 à 4,
caractérisé par le fait
- qu'un bras de levier (44) est installé sur le carter de commutation (3), autour d'un tenon (43), bras dont l'une des extrémités est pourvue d'une rainure (45) pour la venue en prise du doigt commutateur (17), et dont l'autre extrémité (46) est en prise avec une rainure (47) pratiquée dans un bras de commutation (48) d'une fourchette de commutation (49), pour faire coulisser cette dernière sur sa tige de commutation (50), en sens inverse du mouvement dudit doigt commutateur (17).

6. Dispositif interne de changement de rapports selon le préambule de la revendication 1,
caractérisé par le fait que
- l'arbre sélecteur (4) est monté à rotation et à coulissement axial dans le carter de commutation (3), et une pièce (16') à doigt sélecteur et commutateur, verrouillée en rotation, est prévue sur ledit arbre sélecteur (4),
- une pièce (24) de blocage et de rappel, disposée sur l'arbre sélecteur (4) concentriquement à la pièce (16') à doigt sélecteur et commutateur, est immobilisée axialement dans le carter de commutation (3) par les parois latérales de celui-ci, mais peut toutefois accomplir un pivotement, et
- une pièce de commutation (36), verrouillée en rotation sur l'arbre commutateur (5), comporte une languette de commutation (38) qui s'engage entre des collerettes de commutation (19), sur la pièce (16') à doigt sélecteur et commutateur, de manière à faire coulisser axialement ladite pièce avec l'arbre sélecteur (4),
- sachant que des collerettes de butée (51 et 52) disposées sur la pièce (16') à doigt sélecteur et commutateur, au voisinage d'un secteur cranté (20'), coopèrent avec un cylindre (53) de la pièce structurelle (23) recevant la bille encliquetable (22).
